# EUROPÄISCHE PATENTSCHRIFT

(11) **EP 0 623 438 B1**
(45) Veröffentlichungstag und Bekanntmachung des Hinweises auf die Patenterteilung: **04.12.1996**
(21) Anmeldenummer: 94104465.3
(22) Anmeldetag: 22.03.1994
(51) Int. Cl.: B29B 7/60, B65G 47/54

(54) **Beschickungseinrichtung für Kalander**
Feeding device for calender
Dispositif d'alimentation pour calandre

(30) Priorität: 15.04.1993 DE 4312272
(43) Veröffentlichungstag der Anmeldung: 09.11.1994
(73) Patentinhaber: Paul Troester Maschinenfabrik, D-30519 Hannover (DE)
(72) Erfinder: Fromm, Gerald, Dipl.-Ing., D-30900 Wedemark (DE)
(74) Vertreter: Junius, Walther, Dr.

(56) Entgegenhaltungen:
- DE-A- 1 679 857
- GB-A- 2 175 561
- US-A- 1 834 573
- US-A- 3 139 170
- US-A- 3 931 879
- US-A- 4 023 672
- US-A- 4 730 718

## Beschreibung

Die Erfindung betrifft eine Beschickungseinrichtung für einen Zwei- oder Mehrwalzen-Kalander, bestehend aus einer Schneidvorrichtung für den in den Kalander einzufütternden Strang, der vorzugsweise von einem Extruder oder einem Walzwerk hergestellt ist, einem hinter der Schneidvorrichtung angeordneten ersten Teil der Transportbahn, auf der die abgeschnittenen Streifen parallel zur Achse der Kalanderwalzen gefördert werden, und einem zweiten Teil der Transportbahn, auf der die Streifen senkrecht zur Achse der Kalanderwalzen in den Walzenspalt gefördert werden und die den ersten Teil der Transportbahn im rechten Winkel fortsetzt.

Eine derartige Beschickungsvorrichtung ist aus der US-A-18 34 573 bekannt geworden. Der erste Teil der hinter der Schneidvorrichtung angeordneten Transportbahn besteht hier aus einem Bandförderer, auf dessen Transportband der von der Schneidvorrichtung abgeschnittene Streifen parallel zu den Achsen der Kalanderwalzen bis zum zweiten Teil der Transportbahn gefördert wird. Dieser zweite Teil der Transportbahn ist ein aus einer Vielzahl parallel angeordneter Ketten bestehender Kettenförderer. Jede Kette ist in je einem Zwischenraum im Verlauf des Transportbandes des ersten Teils der Transportbahn angeordnet, der durch eine dreimalige Umlenkung des Transportbandes gebildet ist, und zwar zuerst durch eine Umlenkung nach unten unter die Transportebene und anschließend wieder eine Umlenkung nach oben, sodaß der Obertrum der Ketten des Kettenförderers mit der Transportebene des Bandförderers fluchtet. Je ein Kettenglied jeder Kette trägt einen Mitnehmer, der hinter den transportierten Streifen faßt und diesen vom Transportband herunterzieht.

Dabei erleiden die Streifen aus sehr weichem und noch warmen Kautschukmaterial Verformungen, die unerwünscht sind. Der Bauaufwand für diese Transportvorrichtung ist durch die vielmalige Umlenkung des Transportbandes hoch, der zum Antrieb des Transportbandes benötigte Energieaufwand ebenfalls, denn die vielmalige Umlenkung des Transportbandes erfordert erhebliche Antriebskräfte. Darüber hinaus birgt die vielmalige Umlenkung der Transportbandes die Gefahr eines Abwerfens des Transportbandes in sich. Weiter besteht die Gefahr, daß an der Oberfläche des Transportbandes hängenbleibende Teile des meist klebrigen Streifenmateriales sich an den die Oberfläche des Transportbandes berührenden Umlenkwalzen unterhalb der Transportebene ansetzen und deren Radius vergrößern und so die Spannung des Transportbandes vergrößern und den Lauf des Transportbandes hemmen. Diese Rollen unterhalb der Transportebene müssen daher immer wieder gereinigt werden.

Durch die US-A-31 39 170 ist eine Transportvorrichtung für Eisenstangen bekannt geworden, die ebenfalls aus zwei rechtwinklig zueinander angeordneten Transportbahnteilen besteht. Der erste Teil der Transportbahn ist ein Rollenförderer, der zweite senkrecht zum ersten Teil verlaufende Teil ein an seinem einen Ende vertikal anhebbarer Kettenförderer, mit dem die Eisenstangen bei der Abnahme der Eisenstangen von den mit Rillen versehenen Rollen von diesen abgehoben werden. Wegen der Länge der zu fördernden Eisenstangen und deren Stabilität können hier Rollen des Rollenförderers und die Ketten des Kettenförderers einen weiten Abstand von einander aufweisen, sodaß der Antrieb der Ketten keinerlei Schwierigkeiten verursacht. Die Ketten des Kettenförderers erstrecken sich zu beiden Seiten der Rollen, sodaß die Lagerung der Kettenumlenkräder ebenfalls keine Schwierigkeiten bereitet.

Für die Förderung weicher Kautschukstreifen ist diese Förderanlage nicht geeignet: Bei der Förderung weicher Kautschukstreifen müssen die Rollen einen möglichst engen Abstand voneinander haben, damit der Kautschukstreifen nicht in einen der Zwischenräume zwischen zwei Walzen hineinläuft. In diese engen Zwischenräume müssen die Umlenkräder des zweiten Teils der Transportbahn eingreifen, die nicht hinter der Rollenbahn angeordnet werden können, weil sie dort die auf engem Raum unterzubringende Lagerung und den Antrieb der Rollen der Rollenbahn stören würden.

Durch die GB-A-21 75 561 ist eine weitere mehrteilige Transportvorrichtung bekannt geworden, bei der zu beiden Seiten eines den ersten Teil der Transportbahn bildenden Rollenförderers die Umlenkrollen eines Riemenförderers angeordnet sind, die von einem vertikal anhebbaren U-förmigen Gestell getragen sind. Hinter diesen Riemenförderer ist ein weiteres Transportband als dritter Teil der Transportbahn geschaltet. Auch diese Transporteinrichtung ist aufwendig und eignet sich für den Transport von abgeschnittenen Kautschukstreifen zu einem Kalander nur schlecht. Jede Rolle des Rollenförderers muß einzeln über je eine Antriebskette angetrieben werden, die mehrmalige Übergabe des sehr weichen Kautschukstreifens kann zu Schwierigkeiten führen.

Die Erfindung vermeidet die Nachteile des Standes der Technik. Es ist die Aufgabe der Erfindung, mit geringem baulichen Aufwand und mit einfachen Mitteln eine einfache Möglichkeit zu schaffen, den Kalander mittig über die gewünschte Breite zu füttern.

Die Erfindung besteht darin, daß der parallel zu den Achsen der Kalanderwalzen verlaufende erste Teil der Transportbahn eine Rollenbahn ist, deren Rollen einseitig auf der dem Kalander abgewandten Seite gelagert sind, daß der zweite, senkrecht zur Achsrichtung der Kalanderwalzen verlaufende Teil der Transportbahn ein unterhalb der Rollenbahn angeordneter, vertikal verschwenkbarer Riemenförderer ist, dessen Riemen beim Verschwenken zwischen den Rollen der Rollenbahn in eine obere Verschwenkstellung hindurchtreten und in dieser oberen Verschwenkstellung oberhalb der Rollenbahn befindlich sind, daß die Umlenkräder auf zwei Wellen je gemeinsam angeordnet sind, daß eine der Wellen fest angeordnet ist und die zweite Welle mit ihren Umlenkrädern um diese Welle verschwenkbar ist, und daß der Durchmesser der zwischen den Rollen der Rollenbahn hindurchtretenden Umlenkräder des Riemenförderers derart groß bemessen ist, daß die Riemen mit ihrem Obertrum in ihrer höchsten Verschwenkstellung durch die Zwischenräume zwischen den Rollen der Rollenbahn hindurchtreten und oberhalb der Rollenbahn befindlich sind, so daß die die Umlenkräder tragende Welle unterhalb der Rollen und der Wellen der Rollen verbleibt.

Zweckmäßige Weiterbildungen der Erfindung sind in den abhängigen Ansprüchen beschrieben.

Hierdurch gelingt es, mit geringem baulichen Aufwand und mit einfachen Mitteln eine einfache Möglichkeit zu schaffen, den Kalander mittig über die gewünschte Breite zu füttern. Der Antrieb der Rollen kann bei dieser Bauweise gemeinsam durch einen langen Riemen oder eine lange Kette erfolgen, ohne daß der Riemenförderer mit diesem Antrieb kollidiert und ohne daß die Welle des Riemenförderers mit den Rollen der Rollenbahn in Berührung kommt.

Mit dieser Vorrichtung lassen sich aus dem Extruder oder von einem Walzwerk kommende Strangteile erheblicher Breite in beliebiger Länge abschneiden und dem Kalander zuführen, insbesondere lassen sich die Strangteile in der nutzbaren Breite der Kalanderwalzen abschneiden. Dadurch wird der Kalander völlig gleichmäßig über seine ganze Breite gefüttert.

Dabei ist es zweckmäßig, wenn die Länge der Rollenbahn und die Breite des Riemenförderers der nutzbaren Breite der Kalanderwalzen entspricht.

Für die Zuführung der Strangabschnitte in den Kalanderwalzenspalt ist es zweckmäßig, wenn die Verschwenkachse des Riemenförderers vor dem Spalt zwischen den Kalanderwalzen angeordnet ist, in den die abgeschnittenen Elastomerstreifen, vorzugsweise aus Kautschuk, einzufüttern sind.

Die Konstruktion läßt sich in einfacher Weise derart gestalten, daß der Riemenförderer mit Hilfe eines Hebelmechanismus verschwenkbar ist, welcher aus einem am Gestell des Riemenförderers angreifenden Hebel und einer am Hebel angreifenden Kolben-Zylinder-Einheit besteht.

Da die von den Riemen zu fördernden Abschnitte aus Kautschukmischungen oftmals klebrig sind, ist es zweckmäßig, Rund- oder Keilriemen aus Material zu wählen, welches unempfindlich gegen klebrige Mischungen ist. Keilriemen haben den Vorteil, daß die Abschnitte immer auf der oberen Seite liegen, so daß die Flanken und die Rollen nicht verschmutzen.

Vorteilhaft für eine einwandfreie Lage und Übergabe der Abschnitte ist es, wenn die Rollen der Rollenbahn motorisch angetrieben sind.

Um einen geeigneten Abstand der Abschnitte voneinander zu erhalten, ist es zweckmäßig, wenn der Teil der hinter der Schneidvorrichtung in der Achse des Extruders oder des Walzwerks verlaufenden Transportbahn mit einer höheren Transportgeschwindigkeit angetrieben ist als der vor der Schneidvorrichtung verlaufende Teil der Transportbahn.

Das Wesen der Erfindung ist nachstehend anhand eines in der Zeichnung schematisch dargestellten Ausführungsbeispieles näher erläutert. Es zeigen:

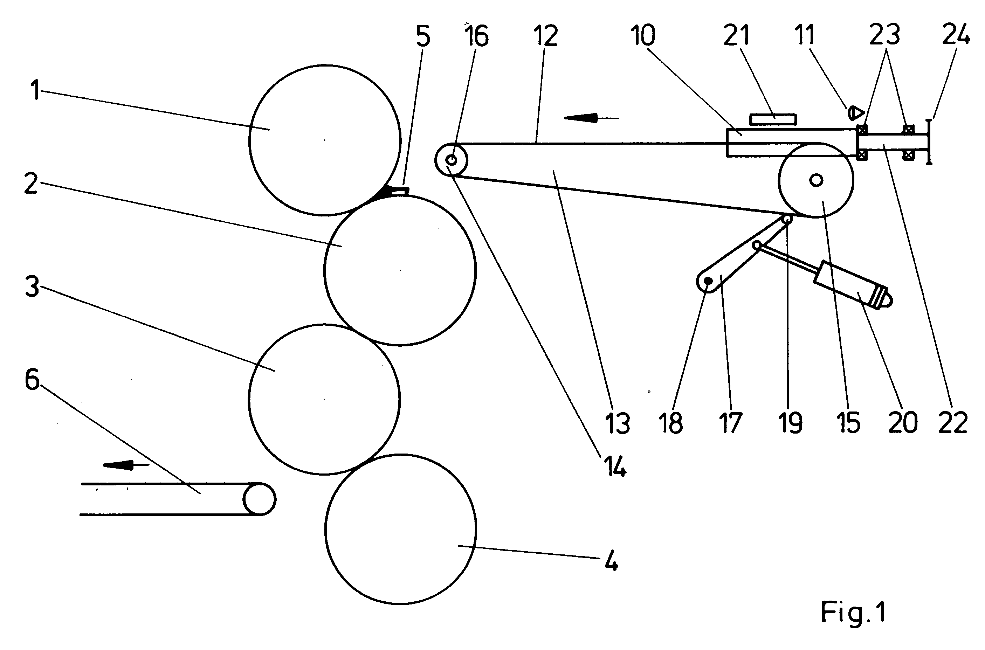

- Fig. 1: eine Seitenansicht der Beschickungseinrichtung,

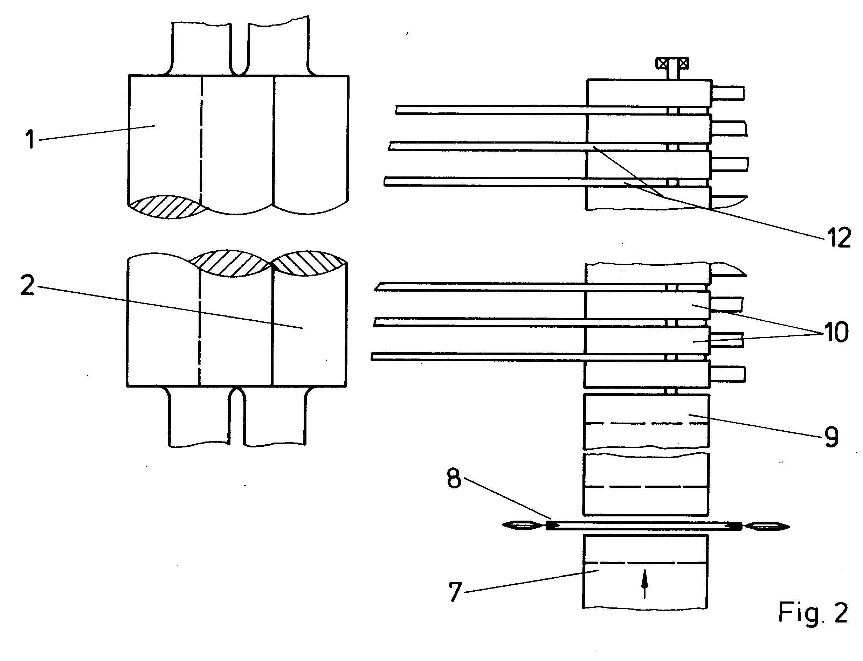

- Fig. 2: eine Ansicht von oben auf die Beschickungseinrichtung.

Von einem Vier-Walzen-Kalander sind die Walzen 1,2,3,4 dargestellt. Zwischen den Walzen 1 und 2 befindet sich der Fütterungsspalt 5. Das kalandrierte Produkt verläßt den Kalander zwischen den Walzen 3 und 4 und wird mit dem Transportband 6 abtransportiert.

Gefüttert wird der Kalander mit einem breiten Streifen 21, der in einem nicht dargestellten Extruder oder Walzwerk erzeugt sein kann und über das Transportband 7 angeliefert wird, mittels der Schneidvorrichtung 8 in Abschnitte geteilt wird, die vorzugsweise eine Länge haben, die der nutzbaren Walzenbreite des Kalanders entspricht. Diese Streifenabschnitte werden über ein weiteres Transportband 9 einem aus Rollen 10 bestehenden Rollenförderer zugeführt. Am Rollenförderer ist eine Vorrichtung zum Erfassen der Position der Streifenabschnitte vorgesehen. Diese ist entweder eine Fotozelle 11 oder ähnl., die einen Hebelmechanismus ansteuert, wenn die Position des Fütterstreifens erreicht ist. Durch die Freiräume zwischen den Rollen 10 können die Riemen 12 eines Riemenförderers 13 hindurchgreifen. Die Riemen 12 sind über Umlenkräder 14, 15 gespannt und angetrieben. Der Riemenförderer 13 ist um die Welle 16 verschwenkbar, die auch die Umlenkräder 14 trägt.

Die Verschwenkung wird mittels eines Hebelmechanismus ausgeführt, der aus Hebeln 17 besteht, die um die Welle 18 verschwenkbar sind und an ihrem freien Ende Rollen 19 oder ein Schiebelager tragen und mittels der Kolben-Zylinder-Einheit 20 verschwenkt werden.

In der Ruhestellung ist der Riemenförderer 13 unterhalb der Rollen 10 des Rollenförderers befindlich. Soll der Riemenförderer 13 einen auf den Rollen 10 liegenden Strangabschnitt 21 in den Fütterungsspalt 5 befördern, so wird der Riemenförderer 13 durch die Kolben-Zylinder-Einheit 20 nach oben verschwenkt, wobei die Riemen 12 durch die Freiräume zwischen den Rollen 10 hindurchtreten und den Strangabschnitt 21 von den Rollen 10 abheben. Durch den Antrieb der Riemen 12 wird dann der Strangabschnitt 21 in den Fütterungsspalt 5 eingeführt.

Die Rollen 10 des Rollenförderers sind einseitig gelagert. Auf der dem Kalander 1,2,3,4 abgewandten Seite der Rollen 10 ist aus jeder Rolle eine Welle 22 herausgeführt, die in Lagern 23 gelagert ist und an deren freien Ende ein Antriebsrad 24 für den Rollenantrieb angeordnet ist.

Zweckmäßig kann es sein, wenn die Lager 23 mit Abstand von den Rollen 10 angeordnet sind, damit einzeln gelagerte Umlenkräder 15 in den Freiräumen zwischen den benachbarten Wellen 22 im Bereich zwischen der Rolle 10 und dem Lager 23 hindurchtreten können. Dieser Abstand ist aber auch dann von Vorteil, wenn Umlenkräder 15 eines größeren Durchmessers angewandt werden. Dieser größere Durchmesser der Umlenkräder 15 wird gewählt, wenn die Umlenkräder 15 auf einer gemeinsamen Welle angeordnet sind und nur der Obertrum der Riemen 12 durch die Freiräume zwischen den Rollen 10 hindurchtritt und in der oberen Verschwenkstellung die die Umlenkräder 15 tragende Welle unterhalb der Wellen 22 verbleibt.

## Patentansprüche

1. Beschickungseinrichtung für einen Zwei- oder Mehrwalzen-Kalander,
bestehend aus einer Schneidvorrichtung (8) für den in den Kalander einzufütternden Strang, der vorzugsweise von einem Extruder oder einem Walzwerk hergestellt ist, einem hinter der Schneidvorrichtung (8) angeordneten ersten Teil der Transportbahn, auf der die abgeschnittenen Streifen parallel zur Achse der Kalanderwalzen (1,2) gefördert werden, und einem zweiten Teil der Transportbahn, auf der die Streifen senkrecht zur Achse der Kalanderwalzen (1,2) in den Walzenspalt gefördert werden und die den ersten Teil der Transportbahn im rechten Winkel fortsetzt,
dadurch gekennzeichnet,
daß der parallel zu den Achsen der Kalanderwalzen (1,2) verlaufende Teil der Transportbahn eine Rollenbahn ist, deren Rollen (10) einseitig auf der dem Kalander abgewandten Seite gelagert sind,
daß der zweite, senkrecht zur Achsrichtung der Kalanderwalzen (1,2) verlaufende Teil der Transportbahn ein unterhalb der Rollenbahn angeordneter, vertikal verschwenkbarer Riemenförderer ist, dessen Riemen (12) beim Verschwenken zwischen den Rollen (10) der Rollenbahn in eine obere Verschwenkstellung hindurchtreten und in dieser oberen Verschwenkstellung oberhalb der Rollenbahn befindlich sind,
daß die Umlenkräder (14,15) auf zwei Wellen je gemeinsam angeordnet sind, daß eine (16) der Wellen fest angeordnet ist und die zweite Welle mit ihren Umlenkrädern (15) um diese Welle (16) verschwenkbar ist,
und daß der Durchmesser der zwischen den Rollen (10) der Rollenbahn hindurchtretenden Umlenkräder (15) des Riemenförderers (13) derart groß bemessen ist, daß die Riemen (12) mit ihrem Obertrum in ihrer höchsten Verschwenkstellung durch die Zwischenräume zwischen den Rollen (10) der Rollenbahn hindurchtreten und oberhalb der Rollenbahn befindlich sind,
so daß die die Umlenkräder (15) tragende Welle unterhalb der Rollen (10) und der Wellen (22) der Rollen (10) verbleibt.

2. Vorrichtung nach Anspruch 1,
dadurch gekennzeichnet,
daß die Länge der Rollenbahn und die Breite des Riemenförderers (13) der nutzbaren Breite der Kalanderwalzen (1,2,3,4) entspricht.

3. Vorrichtung nach Anspruch 1,
dadurch gekennzeichnet,
daß die Verschwenkachse (16) des Riemenförderers (13) vor dem Spalt zwischen den Kalanderwalzen (1,2) oder einem anderen Spalt angeordnet ist, in den die abgeschnittenen Futterstreifen (21) einzufüttern sind.

4. Vorrichtung nach Anspruch 1,
dadurch gekennzeichnet,
daß der Riemenförderer (13) mit Hilfe eines Hebelmechanismus verschwenkbar ist, welcher aus mindestens einem am Gestell des Riemenförderers (13) angreifenden Hebel (17) und einer an dem Hebel (17) angreifenden Kolben-Zylinder-Einheit (20) besteht.

5. Vorrichtung nach Anspruch 1,
dadurch gekennzeichnet,
daß die Riemen (12) Keilriemen oder Rundriemen sind.

6. Vorrichtung nach Anspruch 1,
dadurch gekennzeichnet,
daß die Rollen (10) der Rollenbahn motorisch angetrieben sind .

7. Vorrichtung nach Anspruch 1,
dadurch gekennzeichnet,
daß der Teil (9,10) der hinter der Schneidvorrichtung (8) verlaufenden Transportbahn zeitweise mit einer höheren Transportgeschwindigkeit angetrieben ist als der vor der Schneidvorrichtung (8) verlaufende Teil (7) der Transportbahn.

## Claims

1. Feeding apparatus for a calender with two or more rolls,
consisting of a cutting device (8) for the strip which is to be fed into the calender and is preferably produced by an extruder or a rolling mill, a first part of the conveyor disposed after the cutting device (8) and on which the cut strips are conveyed parallel with the axis of the calender rolls (1, 2), and a second part of the conveyor on which the strips are conveyed perpendicular to the axis of the calender rolls (1, 2) into the roll gap and which is a continuation at right angles of the first part of the conveyor,
characterised in that the part of the conveyor running parallel with the axis of the calender rolls (1, 2) is a roller conveyor whose rollers (10) are mounted on the side remote from the calender at one end, in that the second part of the conveyor running perpendicular to the axial direction of the calender rolls (1, 2) is a belt conveyor which is pivotable vertically and disposed under the roller conveyor and whose belts (12) when pivoted pass through between the rollers (10) of the roller conveyor into an upper pivoting position and are located above the roller conveyor in this upper pivoted position, in that the end wheels (14, 15) are disposed together on two shafts, in that one (16) of the shafts is fixed in position and the second shaft is pivotable with its end wheels (15) about this shaft (16), and in that the diameter of the end wheels (15) of the belt conveyor (13) passing through between the rollers (10) of the roller conveyor is such that in their highest pivoting position the upper halves of the belts (12) pass through the interspaces between the rollers (10) of the roller conveyor and are located above the roller conveyor so that the shaft carrying the end wheels (15) remains under the rollers (10) and the shafts (22) of the rollers (10).

2. Device according to claim 1, characterised in that the length of the roller conveyor and the breadth of the belt conveyor (13) correspond to the useful breadth of the calender rolls (1, 2, 3, 4).

3. Device according to claim 1, characterised in that the pivoting axis (16) of the belt conveyor (13) is located before the gap between the calender rolls (1, 2) or another gap into which the cut strips (21) are to be fed

4. Device according to claim 1, characterised in that the belt conveyor (13) is pivotable with the aid of a lever mechanism which consists of at least one lever (17) acting on the frame of the belt conveyor (13) and a piston and cylinder unit (20) acting on the lever (17).

5. Device according to claim 1, characterised in that the belts (12) are V-belts or round belts.

6. Device according to claim 1, characterised in that the rollers (10) of the roller conveyor are driven by motor.

7. Device according to claim 1, characterised in that at times the part (9, 10) of the conveyor running behind the cutting device (8) is driven at a higher conveying speed than the part (7) of the conveyor running in front of the cutting device (8).

## Revendications

1. Dispositif d'alimentation pour une calandre à deux ou plus de deux rouleaux, composé d'un dispositif de coupe (8) pour le profilé qu'il s'agit d'engager dans la calandre et qui est de préférence produit par une extrudeuse ou un laminoir, une première partie de la voie de transport disposée en aval du dispositif de coupe (8), sur laquelle les bandes découpées sont transportées parallèlement à l'axe des rouleaux (1, 2) de la calandre, et une deuxième partie du couloir de transport, sur laquelle les bandes sont poussés dans la fente entre rouleaux perpendiculairement à l'axe des rouleaux (1, 2) de la calandre, et qui prolonge la première partie du couloir de transport à angle droit,
caractérisé
en ce que la première partie du couloir de transport, qui s'étend parallèlement aux axes des rouleaux (1, 2) de la calandre, est un transporteur à rouleaux dont les rouleaux (10) sont tourillonnés unilatéralement sur le côté qui est le plus éloigné de la calandre, en ce que la deuxième partie du couloir de transport, qui s'étend perpendiculairement à la direction axiale des rouleaux (1, 2) de la calandre, est un transporteur à courroies disposé au-dessous du transporteur à rouleaux et capable de pivoter dans le plan vertical, et dont les courroies (12) passent entre les rouleaux (10) du transporteur à rouleaux pendant le pivotement, pour prendre une position de pivotement supérieure, et se trouvent au-dessus du transporteur à rouleaux dans cette position de pivotement supérieure, en ce que les roues de renvoi (14, 15) sont agencées sur deux arbres en commun, en ce qu'un (16) des arbres est agencé fixe et le deuxième, avec ses roues de renvoi (15), peut pivoter autour de cet arbre (16), et en ce que le diamètre des roues de renvoi (15) du transporteur à courroies (13) qui s'engage entre les rouleaux (10) du transporteur à rouleaux est calculé suffisamment grand pour que les courroies (12) traversent, par leur brin supérieur, les intervalles entre les rouleaux (10) du transporteur à rouleaux pour prendre leur position de pivotement extrême supérieure, et se trouvent au-dessous du transporteur à rouleaux, de sorte que l'arbre qui porte les roues de renvoi reste au-dessous des rouleaux (10) et des arbres (22) des rouleaux (10).

2. Dispositif selon la revendication 1,
caractérisé
en ce que la longueur du transporteur à rouleaux et la largeur du transporteur à courroies (13) correspondent à la largeur utilisable des rouleaux (1, 2, 3, 4,) de la calandre.

3. Dispositif selon la revendication 1,
caractérisé
en ce que l'axe de pivotement (16) du transporteur à courroies (13) est disposé en amont de la fente entre les rouleaux (1, 2) de la calandre ou en amont d'une autre fente dans laquelle les bandes de chargement découpées (21) doivent être chargées.

4. Dispositif selon la revendication 1,
caractérisé
en ce que le transporteur à courroies (13) peut pivoter sous l'action d'un mécanisme à leviers qui est composé d'au moins un levier (17) qui attaque le châssis du transporteur à courroies (13) et d'une unité à piston-cylindre (20) qui attaque le levier (17).

5. Dispositif selon la revendication 1,
caractérisé
en ce que les courroies (12) sont des courroies trapézoïdales ou des courroies rondes.

6. Dispositif selon la revendication 1,
caractérisé
en ce que les rouleaux (10) du transporteur à rouleaux sont entraînés par moteur.

7. Dispositif selon la revendication 1,
caractérisé
en ce que la partie (9, 10) du couloir de transport qui est située en aval du dispositif de coupe (8) est entraînée temporairement à une vitesse de transport plus élevée que celle de la partie (7) du couloir de transport qui s'étend en amont du dispositif de coupe (8).
